# EUROPÄISCHE PATENTSCHRIFT

(11) **EP 0 896 901 B1**
(45) Veröffentlichungstag und Bekanntmachung des Hinweises auf die Patenterteilung: **22.02.2006**
(21) Anmeldenummer: 98111234.5
(22) Anmeldetag: 18.06.1998
(51) Int. Cl.: B60R 16/00, F16H 59/02

(54) **Manuelle Steuereinrichtung für eine Dauerbremse**
Manual control device for a retarder
Dispositif de commande manuelle pour un ralentisseur

(30) Priorität: 09.08.1997 DE 19734625
(43) Veröffentlichungstag der Anmeldung: 17.02.1999
(73) Patentinhaber: MAN Nutzfahrzeuge Aktiengesellschaft, 80976 München (DE)
(72) Erfinder: Eisermann, Günter, 85757 Karlsfeld (DE)

(56) Entgegenhaltungen:
- EP-A- 0 444 250
- DE-A- 4 313 685
- DE-A- 4 338 098
- DE-A- 4 446 085
- DE-A- 4 446 120
- DE-A- 19 537 273
- FR-A- 2 146 994

## Beschreibung

Die Erfindung betrifft eine Einrichtung nach dem Oberbegriff des Patentanspruches. Eine solche Einrichtung ist im gattungsgemäßen Dokument DE 4446120 beschrieben. Standardmäßige Einrichtungen für die Bedienung von Retardern sind aus Ausführungsbeispielen bekannt.

Ein Beispiel davon ist die Bedienung eines Retarders mittels eines Lenkstockhebels, der die Stufen mit den rastenden Stellungen "0" für abgeschaltet, "V" für das Bremsen bei Halten der Geschwindigkeit mit unterschiedlicher Bremswirkung und "R₁" bis "R₄" für die unterschiedliche Bremsstärke, die aber in der jeweiligen Bremsstufe konstant bleibt, aufweist.

In dieser Ausführung sind nur kleine Bewegungswege für das Schalten der einzelnen Stufen vorhanden und man kann sich leicht verschalten.

Ein weiterer Nachteil ist, daß durch die vielen rastenden Stellungen insgesamt ein großer Zentriwinkel am Lenkstock benötigt wird und dadurch die Anordnung des Bedienhebels nicht optimal gewählt werden kann, weil im Normalfall ein weiterer Bedienhebel auf der gleichen Seite am Lenkstock angeordnet ist.

Der Erfindung liegt die Aufgabe zugrunde, die Schaltbarkeit einer in Stufen schaltbaren Dauerbremse zu verbessern.

Die Aufgabe wird erfindungsgemäß durch die Merkmale des Patentanspruches gelöst.

Der Bedienhebel hat nur eine rastende Neutralposition und ist in zwei nichtrastende Auslenkpositionen, in der der Hebel eine Rückstellkraft hat, bringbar. Stirnseitig weist der Bedienhebel eine Drucktaste auf.

Erfindungsgemäß ist durch Bedienen des Bedienhebels in die Auslenkposition (I) der Retarder einschaltbar und für stärkere Bremsstufen hochschaltbar und durch Bedienen des Hebels die Auslenkposition (II) herunterschaltbar in weniger starke Bremsstufen. Bei längerem Halten des Bedienhebels in der Auslenkposition (I) schalten sich die Schaltstufen nacheinander hoch bis zur stärksten Bremsstufe und bei längerem Halten des Bedienhebels in der Auslenkposition (II) schalten sich die Schaltstufen nacheinander herunter, bei entsprechendem Halten bis auf 0. Die erste Bremsstufe ist die Stufe "V", in der der Retarder bei unterschiedlichem Gefälle die Geschwindigkeit, die das Fahrzeug bei Beginn der Bremsung hat, nach Möglichkeit einhält. Bei weiterem kurzen Bedienen des Bedienhebels in die Auslenkposition (I) ist jede der Retarder-Bremsstufen "R₁" bis "R₄" nacheinander schaltbar. Die Bremsstufen "R₁" bis R₄" sind unterschiedlich im Bremsmoment, aber jeweils in der eingestellten Stufe konstant.

Mit der Drucktaste ist der Retarder schnellabschaltbar, man ist also nicht gezwungen die einzelnen Bremsstufen zurückschalten.

Dadurch, daß der Bedienhebel nur zwei Auslenkpositionen hat, ist der beanspruchte Zentriwinkel klein und dadurch die Lage des Bedienhebels in eine verbesserte Bedienposition bringbar.

Als Beispiel ist hier die Einrichtung für das Bedienen eines Retarders beschrieben, was natürlich auch für jede andere, in Stufen schaltbare Dauerbremse gilt.

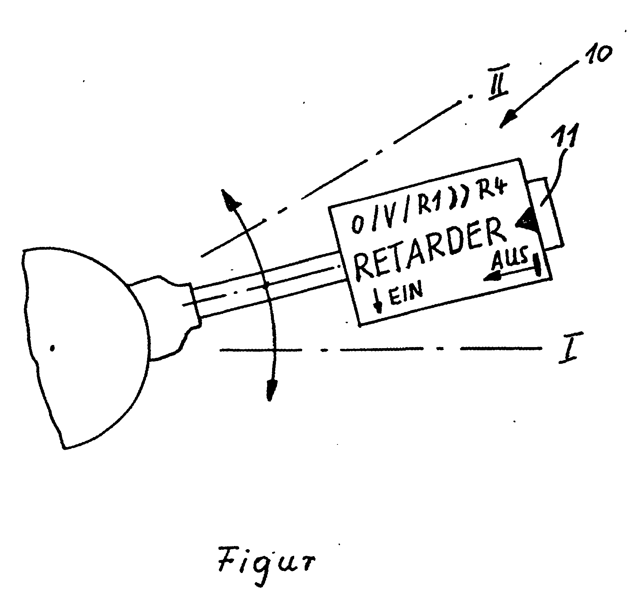

Die Figur zeigt den Lenkstockhebel 10 in der rastenden Neutralposition und die Auslenkpositionen (I) und (II).

Durch Bedienen des Bedienhebels 10 von seiner rastenden Neutralposition in die Auslenkposition (I) oder (II) ist jeweils eine Bremsstufe herauf- oder herunterschaltbar. V ist eine geschwindigkeitsgeregelte Schattstufe, in welcher der Retarder, je nach Gefälle, unterschiedliche Bremsmomente einsteuert. Mit den Retarderstufen R₁ bis R₄ sind unterschiedliche Bremsmomente einschaltbar, die aber in der jeweiligen Bremsstufe konstant sind.

Bei längerem Halten des Bedienhebels 10 in der Auslenkposition (I) sind nacheinander alle Schaltstufen des Retarders bis zur stärksten Bremsstufe schaltbar.

Durch Bedienen des Bedienhebels in die Auslenkposition (II) ist der Retarder in Stufen oder nacheinander, wie bei dem Hochschalten, herunterschaltbar bis zum Ausschalten desselben.

Mit der Drucktaste 11 ist der Retarder schnellabschaltbar.

## Patentansprüche

1. Einrichtung in einem Nutzfahrzeug für die Bedienung eines in Stufen schaltbaren Retarders, Intarders oder einer ähnlich schaltbaren Dauerbremse mit einem am Lenkstock angeordneten Bedienhebel, der eine Neutralposition hat und in zwei nichtrastende Schaltpositionen bringbar ist und weiterhin eine stirnseitige Drucktaste aufweist, **dadurch gekennzeichnet, daß** durch jeweils kurzes Bedienen des Bedienhebels (10) in die Auslenkposition (I) der Retarder in eine erste, zweite oder jede weitere Bremsstufe hochschattbar ist und bei längerem Halten des Bedienhebels (10) in der Auslenkposition (I) die Bremsstufen nacheinander bis zur jeden weiteren Bremsstufe hochschaltbar sind und in der Auslenkposition (II) die Schaltstufen in der gleichen Weise aber in umgekehrter Reihenfolge herunterschaltbar sind, und daß durch Drücken der stirnseitigen Drucktaste (11) der Retarder schnellabschaltbar ist.

## Claims

1. Device in a commercial vehicle for the operation of a retarder or intarder which can be engaged in steps or of a similarly engageable sustained-action brake with an operating lever which is arranged on the steering column, has a neutral position, can be brought into two non-locking switching positions and is, in addition, provided with a push button on its front face, **characterised in that** by briefly moving the operating lever (10) to the deflection position (I) the retarder can be shifted up to first, second or any higher braking stage and by holding the operating lever (10) in said deflection position (I) for prolonged periods the brake stages can be shifted up to any higher braking stage and, in deflection position (II), the shifting stages can be shifted down in the same manner, but in reverse sequence and that by pressing the push button (11) on the front face the retarder can be disengaged quickly.

## Revendications

1. Dispositif dans un véhicule industriel pour commander un ralentisseur commandable par niveau ou un Intarder, ou bien encore un frein continu commandable de manière similaire par le biais d'un commodo disposé sur la colonne de direction, lequel possède une position de point mort et est réglable sur deux positions de commande à retour, et qui présente un bouton à poussoir sur la face avant, **caractérisé en ce que** le ralentisseur peut être commandé vers le haut dans le première, deuxième ou chaque niveau supérieur par un court effleurement du commodo (10) dans la position de déplacement (I) et, en cas de maintien prolongé du commodo (10) dans la position de déplacement (I), il est possible de monter les niveaux de freinage les uns après les autres jusqu'à chaque niveau de freinage suivant et, dans la position de déplacement (II), de rétrograder les niveaux de freinage de la même manière, mais dans l'ordre inverse, et **en ce que** le ralentisseur peut être coupé rapidement par une simple pression sur le bouton à poussoir (11) placé sur la face avant du commodo.
